# EUROPÄISCHE PATENTANMELDUNG

(11) **EP 0 892 492 A1**
(43) Veröffentlichungstag der Anmeldung: **20.01.1999**
(21) Anmeldenummer: 98113228.5
(22) Anmeldetag: 16.07.1998
(51) Int. Cl.: H02P 8/22

(54) **Verfahren und Schaltungsanordnung zur Ansteuerung von Schrittmotoren**

(30) Priorität: 16.07.1997 DE 19730391
(71) Anmelder: Zentrum Mikroelektronik Dresden GmbH, D-01109 Dresden (DE)
(72) Erfinder: Boldt, Jürgen Dr., 01277 Dresden (DE)
(74) Vertreter: Patentanwälte Lippert, Stachow, Schmidt & Partner

(57) **Zusammenfassung**

Die Erfindung betrifft ein Verfahren und eine Schaltungsanordnung zur Ansteuerung von Schrittmotoren mit einer ersten und einer zweiten Spule. Die Aufgabe der Erfindung besteht darin, bei einer digitalen Ansteuerung von Schrittmotoren nach außen gerichtete Störungen weitestgehend zu vermeiden.

Dies wird dadurch gelöst, daß zum Zwecke der digitalen Steuerung die digitalen Eingangssignale, die für jede Spule bestimmt sind, in analoge Sinus- bzw. Cosinusspannungssignale gewandelt werden und diese analogen Spannungssignale in analoge Stromsignale konvertiert werden, mit denen ihrerseits die Spulen des Schrittmotors angesteuert werden.

## Beschreibung

Die Erfindung betrifft ein Verfahren zur Ansteuerung von Schrittmotoren mit einer ersten und einer zweiten Spule, bei dem zum Zwecke der digitalen Steuerung ein erstes Signal für die erste Spule und ein zweites Signal für die zweite Spule erzeugt wird.

Die Erfindung betrifft weiterhin eine Schaltungsanordnung zur Durchführung des Verfahrens mit einer ersten und einer zweiten Spule, die über je eine Treiberschaltung ansteuerbar und über diese mittelbar mit einer digitalen Signalquelle verbunden sind.

Für eine Instrumentenanzeige finden Schrittmotoren Anwendung. Diese Schrittmotoren sind mit einer kreuzweisen Anordnung von Spulen versehen, in deren Mitte ein Permanentmagnet drehbar gelagert ist, der über ein Getriebe eine Welle, beispielsweise eine Zeigerwelle, antreibt. Entsprechend der Spulenansteuerung wird der Drehwinkel der Welle verstellt. Hierzu wird eine Spule mit einem Sinus und die andere Spule mit einem Cosinusspannungssignal angesteuert. Dabei bestimmt das Spannungsverhältnis den Drehwinkel.

Es ist nunmehr bekannt, derartige Schrittmotoren nicht nur mit einem Sinus- und Cosinussignal anzusteuern, sondern beim Einsatz einer digitalen Steuerung anstelle der Sinus- und Cosinusanalogspannungen ein pulsweitenmoduliertes Spannungssignal (PWM), welches aus der digitalen Signalspannung gewonnen wird, auf die Spulen aufzuprägen. Bei derartigen PWM-Signalen bestimmt sodann der Quotient der Tastverhältnisse beider digitaler Signale den Drehwinkel.

Als besonders nachteilig hat sich diese Lösung dahingehend erwiesen, daß durch die steilen Flanken des PWM-Signales das hochfrequente Signal andere Geräte in der Nähe des Schrittmotors gestört werden.

Der Erfindung liegt nunmehr die Aufgabe zugrunde, bei einer digitalen Ansteuerung von Schrittmotoren nach außen gerichtete Störungen weitestgehend zu vermeiden.

Die verfahrensseitige Lösung dieser Aufgabenstellung sieht vor, daß aus dem ersten digitalen Signal ein erstes analoges Stromsignal und aus dem zweiten digitalen Signal ein zweites analoges Stromsignal erzeugt wird. Die erste Spule wird mit dem ersten analogen Stromsignal und die zweite Spule mit dem zweiten analogen Stromsignal angesteuert.

Mit diesem Verfahren wird die Möglichkeit geschaffen, einen Schrittmotor digital, beispielsweise über einen Rechner, anzusteuern und dabei ein PWM-Signal zu vermeiden. Das analoge Stromsignal, welches in dem erfindungsgemäßen Verfahren eingesetzt wird, zeigt keine störenden Abstrahlungen nach außen.

Durch die Verwendung eines Stromsignals, d. h. die Verwendung des Stroms, der durch die Spulen fließt, als Signalträger, wird außerdem die Störbeeinflussung von außen auf den Schrittmotor vermieden. Es ist insbesondere beim Einsatz in Kraftfahrzeugen nämlich nicht auszuschließen, daß eine Störbeeinflussung von außen auftritt, die infolge der induktiven Eigenschaften in den Spulen des Schrittmotors Störspannungen induzieren, die sodann zu einem Fehlverhalten des Schrittmotors führen. Treten bei dem erfindungsgemäßen Verfahren derartige äußere Störbeeinflussungen auf, so wird zwar eine Spannungsinduktion auftreten, die jedoch keine Auswirkung auf das Verhalten des Schrittmotors hat, da dieser nicht von einer Signalspannung sondern von einem Stromsignal gesteuert wird.

In einer besonders günstigen Ausgestaltung der Erfindung ist vorgesehen, daß für jeden zu erzeugenden Wert des ersten Stromsignales ein erstes Eingangswort und für jeden zu erzeugenden Wert des zweiten Stromsignals ein zweites Eingangswort erzeugt wird. Mittels einer ersten Digital-/Analogwandlung werden die ersten Eingangsworte in eine analoge Sinusspannung und die zweiten Eingangsworte in eine analoge Cosinusspannung umgewandelt. Die Sinus- und die Cosinusspannung werden einer Spannungsstromwandlung unterzogen. Dies geschieht derart, daß über je eine spannungsgesteuerte Stromquelle der sinusförmige Strom für die erste Spule und der cosinusförmige Strom für die zweite Spule erzeugt wird.

Durch diese bevorzugte Ausgestaltung wird es möglich, digitale Signale auszugeben, die als Sinus- bzw. Cosinusstromsignal an den Spulen wirksam werden.

In einer weiteren Ausgestaltung des Verfahrens wird eine erste Spannung über der ersten Spule und eine zweite Spannung über der zweiten Spule gemessen und beide Spannungen zu einer Summenspannung summiert. Diese Summenspannung wird mit einer ersten Referenzspannung verglichen. Diese erste Referenzspannung wird über eine zweite Digital-/Analogwandlung eines digital gespeicherten Referenzsignals erzeugt. Das Ergebnis des Vergleiches wird als H- oder L-Signal an einen Zähler geleitet, der entsprechend des H- oder L-Pegels auf- oder abwärts zählt. Das jeweilige Zählergebnis des Zählers liegt als Zählerausgangswort am Zählerausgang an. Die Zählerausgangsworte werden mittels einer zweiten Digital-/Analogwandlung in eine zweite analoge Referenzspannung gewandelt, die der ersten Digital-/Analogwandlung zugeführt wird.

Die Referenzspannung bewirkt eine Einstellung des Spannungspegels nach der ersten Digital-/Analogwandlung. Durch diese Rückkopplung wird es somit möglich, entsprechend der Summenspannung eine Beeinflussung des Ausgangspegels der Digital-/Analogwandlung vorzunehmen.

Mit steigender Temperatur vergrößern sich die Spulenwiderstände. Beim Stand der Technik zeigt das keine negativen Wirkungen, da eine Signalspannung aufgegeben wird. Bei einer Stromsteuerung hingegen können die Spannungen über den Spulen die Größe der Betriebsspannung erreichen oder überschreiten. Die Funktion der Stromquellen wären dann nicht mehr gewährleistet, was durch die temperaturabhängige Stromregelung vermieden wird.

Die anordnungsseitige Lösung der Aufgabenstellung sieht vor, daß die digitale Signalquelle über einen ersten Digital-/Analogwandler mit einem Steuerspannungseingang eines Spannungs-/Stromwandlers verbunden ist. Der Stromausgang des Spannungs-/Stromwandlers ist mit der Motortreiberschaltung verbunden.

In einer günstigen Ausgestaltung der erfindungsgemäßen Schaltungsanordnung beinhaltet die Treiberschaltung einen ersten und einen zweiten Steuerungs-FET (Feldeffekttransistor), die vom Stromausgang des Spannungs-/Stromwandlers steuerbar sind. Deren Drains sind über je einen Regeltransistor mit dem Ausgang je eines Operationsverstärkers verbunden. Der zweite Steuerungs-FET arbeitet als spannungsunabhängige Stromquelle, die von dem ersten Steuerungs-FET gesteuert wird. Diese Anordnung arbeitet somit als Stromspiegel, in einem Spiegelverhältnis, welches durch das Dimensionierungsverhältnis beider FET's eingestellt wird. Vorzugsweise kann das Spiegelverhältnis zwischen dem ersten und dem zweiten FET 1:10 betragen.

Der zweite FET ist alternierend mit je einer der beiden Spulen in einem Stromkreis in Reihe mit einer Betriebsspannungsquelle geschaltet.

Damit steuert der zweite FET den Stromfluß durch die Spule, wobei die Ansteuerung des ersten und des zweiten FET über den Stromeingang erfolgt, der mit dem Stromausgang des Spannungs-/Stromwandlers verbunden ist.

Weiterhin ist es zweckmäßig, zwischen der Betriebsspannungsquelle und dem zweiten FET eine Stromrichtungsschaltung anzuordnen, innerhalb der die Spule zwischengeschaltet ist.

Diese Stromrichtungsschaltung bewirkt eine Änderung in der Durchflußrichtung durch die Spule. So kann von einem Signal gesteuert einmal die Betriebsspannung an die eine Seite und zum anderen an die andere Seite der Spule angelegt werden, so daß eine Stromrichtungsumkehr erfolgen kann, auch wenn durch die Schaltung an sich keine negativen Potentiale erzeugt werden können.

Zur Ausregelung des Temperaturverhaltens der Spule ist in einer weiteren Ausgestaltung der Schaltungsanordnung vorgesehen, daß beide Anschlüsse der ersten Spule und beide Anschlüssen der zweiten Spule mit je einem Eingang eines Summierverstärkers verbunden sind. Dessen Ausgang ist mit einem Komparatoreingang verbunden, wobei der andere Komparatoreingang mit speichergesteuerten Referenzspannungsquelle verbunden ist. Der Ausgang des Komparators ist mit einem Auf/Abwärtszähler verbunden, dessen Zählerausgang über einen zweiten Digital-/Analogwandler mit dem Referenzspannungseingang des ersten Digital-/Analogwandlers verbunden ist.

Durch den Summierverstärker wird ein Summenspannungssignal aus den beiden Spulenspannungen erzeugt, welches mit der Referenzspannung aus der Referenzspannungsquelle verglichen wird. Die Referenzspannungsquelle ihrerseits besteht aus einem Speicher, der über einen Digital-/Analogwandler mit dem Komparatoreingang verbunden ist. Dadurch wird es möglich, in dem ROM verschiedene Spannungswerte für einen Spannungsverlauf zu speichern und über den Digital-/Analogwandler an den Komparator zu geben.

Sobald die Summenspannung von dem Referenzsignal abweicht, was in der Regel durch eine Temperaturbeeinflussung der Spulen und damit einer Widerstandsänderung der Spulen geschieht, zeigt der Komparator an seinem Ausgang je nach dem Vergleichsergebnis einen H- oder einen L-Pegel. Dieser Pegel setzt sodann den Auf/Abwärtszähler in Gang, der seinerseits solange auf- oder abwärts zählt, bis der Komparator wieder in den anderen Zustand springt. Über den zweiten Digital-/Analogwandler bewirkt das Zählersignal die Erzeugung einer analogen Referenzspannung, die an den Referenzspannungseingang des ersten Digital-Analogwandlers angelegt wird. Damit wird durch diese Referenzspannung der Spannungspegel am Ausgang des Digital-/Analogwandlers verstellt und damit eine temperaturabhängige Widerstandsänderung wirkungslos.

Die Erfindung soll nachfolgend anhand eines Ausführungsbeispieles näher erläutert werden. In den zugehörigen Zeichnungen zeigt,
- Fig. 1: ein Blockschaltbild einer erfindungsgemäßen Schaltungsanordnung und
- Fig. 2: eine Treiberschaltungsanordnung.

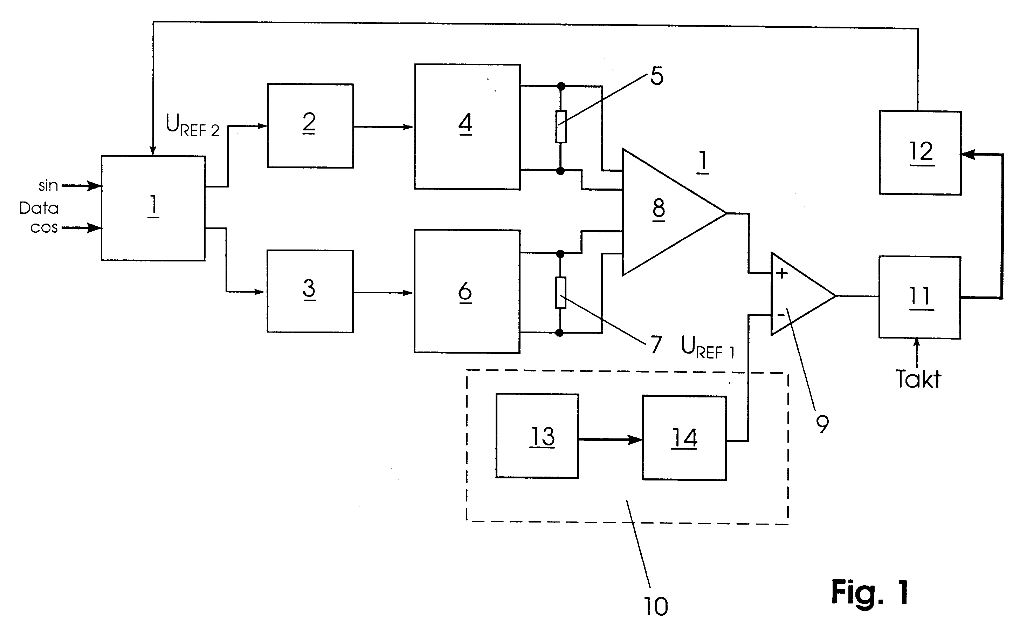

Wie in Fig. 1 ersichtlich, erfolgt an einem ersten Digital-/Analogwandler 1 die Eingabe eines ersten digitalen Signals sin und eines zweiten digitalen Signals cos. Am Ausgang des Digital-/Analogwandlers wird aus dem ersten digitalen Signal sin eine analoge Sinusspannung und aus dem zweiten digitalen Signal cos eine analoge Cosinusspannung geformt.

Die Sinusspannung wird an einen Spannungs-/Stromwandler 2 und die Cosinusspannung an einen Spannungs-/Stromwandler 3 geleitet. In diesen Spannungs-/Stromwandlern 2 und 3 werden die analogen Sinus- bzw. Cosinusspannungen in Stromsignale gewandelt, wobei der Strom der Signalträger ist.

Über eine Treiberschaltung 4 wird die erste Spule 5 angesteuert. Über die Treiberschaltung 6 wird die zweite Spule 7 angesteuert. Das Verhältnis beider Stromflüsse bestimmt den Drehwinkel der Welle an dem Schrittmotor.

Zur Ausregelung des Temperatureinflusses ist eine Regelung vorgesehen, die aus einem Summierverstärker 8, einem Komparator 9, einer Referenzspannungsquelle 10, einem Zähler 11 und einem zweiten Digital-/Analogwandler 12 besteht.

In dem Summierverstärker 8 wird durch Summation der Spannungsabfälle über der ersten Spule 5 und der zweiten Spule 7 eine Summenspannung Uₛ erzeugt. Diese Summenspannung Uₛ wird in einem Komparator 9 mit einer ersten Referenzspannung U_{REF1} verglichen. Die erste Referenzspannung U_{REF1} wird aus der Referenzspannungsquelle 10 gewonnen, die ihrerseits aus einem Nur-Lesespeicher 13 und einem Digital-/Analogwandler 14 besteht.

Der Ausgang des Komparators 9 zeigt bei fehlender Übereinstimmung zwischen Uₛ und U_{REF} L-Pegel und ansonsten H-Pegel. Bei Auftreten eines L-Pegels am Ausgang des Komparators 9 zählt der Zähler 11 aufwärts. Dieses Zählergebnis führt an dem Ausgang des zweiten Digital-/Analogwandlers 12 zu einer zweiten Referenzspannung 2, die dem ersten Digital-/Analogwandler 1 aufgegeben wird. Infolge dieser zweiten Referenzspannung U_{REF2} verändert sich die Ausgangsspannung des ersten Digital-/Analogwandlers 1, was dazu führt, daß über die Spannungs-/Stromwandler 2 und 3 auch die Stromsignale an deren Ausgängen verändert werden, bis die Temperaturdrift der Widerstände der ersten Spule 5 und er zweiten Spule 7 ausgeglichen ist, was zu einer Übereinstimmung zwischen der Summenspannung Uₛ und der ersten Referenzspannung U_{REF1} führt, woraufhin der Komparator 9 an seinem Ausgang H-Pegel zeigt.

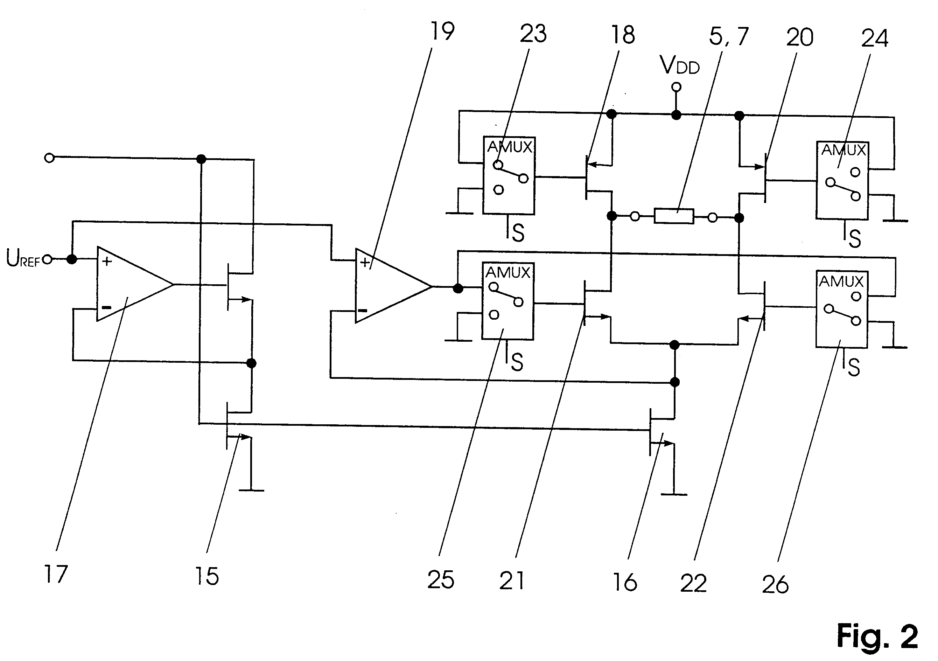

Wie in Fig. 2 gezeigt, ist ein erster Steuerungs-FET 15 und ein zweiter Steuerungs-FET 16 vorgesehen. An dem Drain des ersten Steuerungs-FET 15 wird über einen ersten Operationsverstärker 17 und einen Regeltransistor 17a eine konstante Spannung eingestellt, da dieser eingangsseitig mit einer konstanten Referenzsspannung U_{REF} versorgt ist.

In gleicher Weise wird das Drain des zweiten Steuerungs-FET 16 über einen zweiten Operationsverstärker 18 und einen Regeltransistor 18a auf konstanter Spannung gehalten. Diese Anordnung bildet einen Stromspiegel mit einem Spiegelverhältnis 1:10. Der zweite Steuerungs-FET 16 arbeitet als Stromquelle und dient der Steuerung des Stromflusses durch die erste Spule 5 oder die zweite Spule 7, wobei der Strom von der Betriebsspannung V_{DD} über eine Stromrichtungsschaltung, in deren Inneren die Spule 5 oder 7 angeordnet sind, gegen Masse fließt. Die Schalttransistoren 19 bis 22 werden von Multiplexern 23 bis 26 angesteuert, die ihrerseits durch ein Steuersignal S steuerbar sind. Dabei besteht die Möglichkeit, daß der Multiplexer 22 den Schalttransistor 19 und der Multiplexer 26 den Schalttransistor 21 öffnet. Eine andere Möglichkeit besteht darin, daß der Multiplexer 24 den Schalttransistor 20 und der Multiplexer 26 den Schalttransistor 20 öffnet, wodurch eine entgegengesetzte Richtung des Stromflusses durch die Spule 5 oder 7 bewirkt wird.

### Bezugszeichenliste

- 1: erster Digital-/Analogwandler
- 2: Spannungs-/Stromwandler
- 3: Spannungs-/Stromwandler
- 4: Treiberschaltung
- 5: erste Spule
- 6: Treiberschaltung
- 7: zweite Spule
- 8: Summierverstärker
- 9: Komparator
- 10: Frequenzspannungsquelle
- 11: Zähler
- 12: zweiter Digital-/Analogwandler
- 13: Nur-Lesespeicher
- 14: Digital-/Analogwandler
- 15: erster Steuerungs-FET
- 16: zweiter Steuerungs-FET
- 17: erster Operationsverstärker
- 17a: Regeltransistor
- 18: zweiter Operationsverstärker
- 18a: Regeltransistor
- 19: Schalttransistor
- 20: Schalttransistor
- 21: Schalttransistor
- 22: Schalttransistor
- 23: Multiplexer
- 24: Multiplexer
- 25: Multiplexer
- 26: Multiplexer
- sin: erstes digitales Signal
- cos: zweites digitales Signal
- Uₛ: Summenspannung
- U_{REF}: Referenzspannung
- U_{REF1}: erste Referenzspannung
- U_{REF2}: zweite Referenzspannung
- V_{DD}: Betriebsspannung
- S: Steuersignal

## Patentansprüche

1. Verfahren zur Ansteuerung von Schrittmotoren mit einer ersten und einer zweiten Spule, bei dem zum Zwecke der digitalen Steuerung ein erstes digitales Signal für die erste Spule und ein zweites digitales Signal für die zweite Spule erzeugt wird, **dadurch gekennzeichnet,** daß aus dem ersten digitalen Signal (sin) ein erstes analoges Stromsignal und aus dem zweiten digitalen Signal (cos) ein zweites analoges Stromsignal erzeugt wird und daß die erste Spule (5) mit dem ersten analogen Stromsignal und die zweite Spule (7) mit dem zweiten analogen Stromsignal angesteuert wird.

2. Verfahren nach Anspruch 1, **dadurch gekennzeichnet,** daß für jeden zu erzeugenden Wert des ersten Stromsignals ein erstes Eingangswort und für jeden zu erzeugenden Wert des zweiten Stromsignals ein zweites Eingangswort erzeugt wird,
daß mittels einer ersten Digital-/Analogwandlung die ersten Eingangsworte in eine analoge Sinusspannung und die zweiten Eingangsworte in eine analoge Cosinusspannung umgewandelt werden und
daß die Sinus- und die Cosinusspannung einer Spannungsstromwandlung derart unterzogen werden, daß über je eine spannungsgesteuerte Spannungsversorgung dem Strom durch die erste Spule (5) das Sinussignal und dem Strom durch die zweite Spule (7) das Cosinussignal aufgeprägt wird.

3. Verfahren nach Anspruch 2, **dadurch gekennzeichnet,** daß über der ersten Spule (5) eine erste Spannung und über der zweiten Spule (7) eine zweite Spannung gemessen wird, daß die erste und die zweite Spannung zu einer Summenspannung (Uₛ) summiert werden, daß die Summenspannung (Uₛ) mit einer ersten analogen Referenzspannung (U_{REF1}), die über eine zweite Digital-/Analogwandlung des digital gespeicherten Referenzsignals erzeugt wird, verglichen wird,
daß das Ergebnis des Vergleiches als H- oder L-Signal ein einen Zähler (12) geleitet wird, der entsprechend des H- oder L-Signals auf- oder abwärts zählt und das jeweilige Zählergebnis als Zählerausgangswort am Zählerausgang anliegt,
daß die Zählerausgangsworte in eine zweite analoge Referenzspannung (U_{REF2}) gewandelt werden, die der ersten Digital-/Analogwandlung zugeführt wird.

4. Schaltungsanordnung zur Ansteuerung von Schrittmotoren mit einer ersten und einer zweiten Spule, die über je eine Treiberschaltung steuerbar und über diese mittelbar mit je einer digitalen Signalquelle verbunden sind, **dadurch gekennzeichnet,**
daß jede digitale Signalquelle (sin, cos) über einen ersten Digital-/Analogwandler (1) mit einem ersten Steuerspannungseingang eines spannungsgesteuerten Stromwandlers (2;3) verbunden ist und
daß der Stromausgang des Spannungs-/Stromwandlers (2;3) mit der Motortreiberschaltung (4;6) verbunden ist.

5. Schaltungsanordnung nach Anspruch 4, **dadurch gekennzeichnet,** daß die Treiberschaltung (4; 6) einen ersten (15) und einen zweiten Steuerungs-FET (16) beinhaltet, die vom Stromausgang des Spannungs-/Stromwandlers (2; 3) steuerbar sind, deren Drains über je einen Regeltransistor (17a; 18a) mit je einem Ausgang eines von einer Konstantspannungsquelle (U_{REF}) gesteuerten Operationsverstärkers (17; 18) verbunden ist und der zweite Steuerungs-FET (16) in Reihe mit einer der beiden Spulen (5; 7) in einem Stromkreis mit einer Betriebsspannungsquelle (V_{DD}) geschaltet sind.

6. Schaltungsanordnung nach Anspruch 5**, dadurch gekennzeichnet,** daß zwischen der Betriebsspannungsquelle (V_{DD}) und dem zweiten Steuerungs-FET (16) eine Stromrichtungsschaltung angeordnet ist, innerhalb der die Spule (5;7) zwischengeschaltet ist.

7. Schaltungsanordnung nach einem der Ansprüche 4 bis 6, **dadurch gekennzeichnet,** daß beide Anschlüsse der ersten Spule (5) und beide Anschlüsse der zweiten Spule (7) mit je einem Eingang eines Summierverstärkers (9) verbunden sind, dessen Ausgang mit einem Komparatoreingang verbunden ist, wobei der andere Komparatoreingang mit einer speichergesteuerten Referenzspannungsquelle (10) verbunden ist, daß der Ausgang des Komparators (9) mit einem Auf-/Abwärtszähler (11) verbunden ist, dessen Ausgang über einen zweiten Digital-/Analogwandler (12) mit dem Referenzspannungseingang (U_{REF2}) des ersten Digital-/Analogwandlers (1) verbunden ist.
